(19) Europäisches Patentamt
European Patent Office
Office européen des brevets

(11) **EP 4 246 172 A2**

(12) **EUROPÄISCHE PATENTANMELDUNG**

(43) Veröffentlichungstag:
20.09.2023 Patentblatt 2023/38

(21) Anmeldenummer: 23183393.0

(22) Anmeldetag: 08.08.2018

(51) Internationale Patentklassifikation (IPC):
*G01S 3/48* *(2006.01)*

(52) Gemeinsame Patentklassifikation (CPC):
G01S 3/48; G01S 3/023

(84) Benannte Vertragsstaaten:
AL AT BE BG CH CY CZ DE DK EE ES FI FR GB GR HR HU IE IS IT LI LT LU LV MC MK MT NL NO PL PT RO RS SE SI SK SM TR

(30) Priorität: 22.08.2017 DE 102017214681

(62) Dokumentnummer(n) der früheren Anmeldung(en) nach Art. 76 EPÜ:
18756167.5 / 3 673 283

(71) Anmelder: Continental Automotive Technologies GmbH
30165 Hannover (DE)

(72) Erfinder:
• Morhart, Christian
81739 München (DE)

• Weisgerber, Lars
81739 München (DE)
• Opitz, Martin
81739 München (DE)

(74) Vertreter: Continental Corporation
c/o Continental Automotive Technologies GmbH
Intellectual Property
Putzbrunnerstr. 69
81739 München (DE)

Bemerkungen:
Diese Anmeldung ist am 04-07-2023 als Teilanmeldung zu der unter INID-Code 62 erwähnten Anmeldung eingereicht worden.

(54) **VORRICHTUNG UND VERFAHREN ZUM BESTIMMEN VON QUALITÄTSEIGENSCHAFTEN FÜR WINKELMESSUNG FÜR EIN KRAFTFAHRZEUG**

(57)    Die Erfindung betrifft eine Vorrichtung zum Bestimmen von Qualitätseigenschaften für Winkelmessungen für ein Kraftfahrzeug, wobei die Vorrichtung umfasst: eine Winkelschätzeinrichtung (10), welche mindestens einen Empfänger umfasst und welche dazu ausgelegt ist, basierend auf Laufzeitunterschied und Antennenabstand eine Winkelschätzung für einen Sender eines Funksignals bereitzustellen; und eine Bewertungseinrichtung (20), welche dazu ausgelegt ist, für die von der Winkelschätzeinrichtung (10) bereitgestellte Winkelschätzung einen Qualitätswert zu bestimmen und basierend auf der Winkelschätzung und dem Qualitätswert die Winkelmessung bereitzustellen.

FIG 2

**Beschreibung**

Technisches Gebiet

Die vorliegende Erfindung betrifft die Bestimmung von Qualitätseigenschaften für Winkelmessungen mit wenigen Antennen.

Insbesondere betrifft die vorliegende Erfindung eine Vorrichtung und ein Verfahren zum Bestimmen von Qualitätseigenschaften für Winkelmessung für ein Kraftfahrzeug.

Technischer Hintergrund

Für den passiven Fahrzeugzugang soll zukünftig das Smartphone als Ersatz zum herkömmlichen Schlüssel zum Einsatz kommen.

Um diese Funktion erfüllen zu können, ist eine hinreichend genaue Lokalisierung des Smartphones notwendig, um die Sicherheit des Zugangs zu gewährleisten. Um Missbrauch zu vermeiden, muss sichergestellt werden, dass sich das Smartphone im Augenblick des Öffnens in unmittelbarer Nachbarschaft zum Fahrzeug befindet.

Dabei wird unter anderem eine Strategie verwendet, Smartphones in enger Nachbarschaft zu einem oder mehreren im Fahrzeug verbauten Transpondermodulen zu lokalisieren.

Das Smartphone ist hierbei auf definierte Funkdienste beschränkt, wobei die "Bluetooth Low Energy", BLE, Funktion besonders im Fokus steht. BLE bezeichnet eine Erweiterung des Industriestandards "Bluetooth".

Eine Möglichkeit zur Lokalisierung eines Smartphones über Bluetooth Low Energy besteht in der Verwendung eines Winkelschätzverfahrenes.

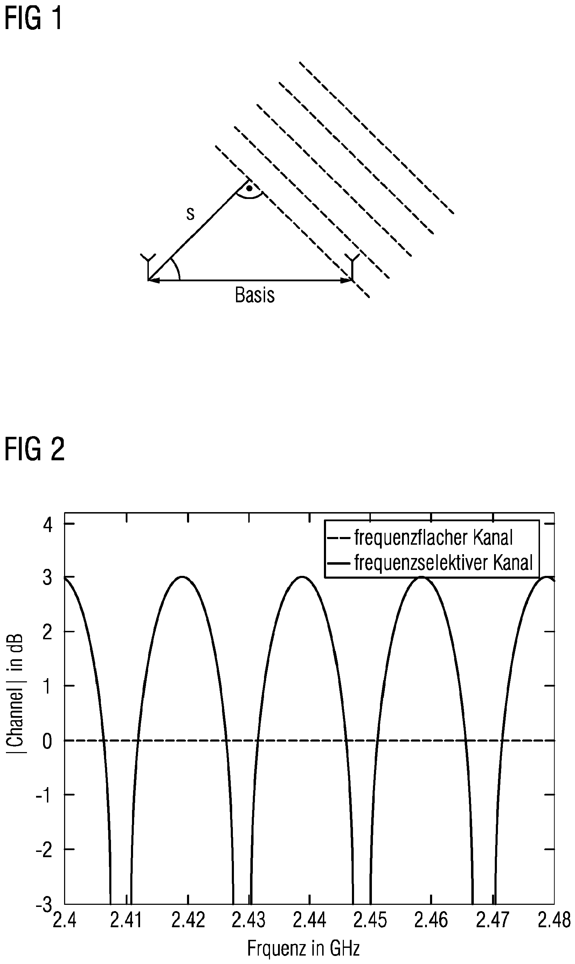

Bei diesem Verfahren werden die Laufzeitunterschiede der Trägerphase zwischen mehreren - mindestens zwei - eng benachbarten Antennen ausgewertet. Eine einfallende Wellenfront passiert nacheinander mehrere Empfangsantennen, welche in einer regelmäßigen Anordnung platziert sind, wie in Fig. 1 dargestellt.

Über den Unterschied der Ankunftszeitpunkte kann die Einfallsrichtung abgeleitet werden. Dieser Unterschied ergibt sich aus Antennenabstand und Richtung entsprechend Formel I:

$$\cos\left(\alpha\right) = \frac{\Delta s}{Basis}$$

Die Formel 1 beschreibt den Zusammenhang zwischen Laufzeitunterschied/Antennenabstand und Richtung.

Der Vorteil dieses Verfahrens der Laufzeitunterschiede der Trägerphase liegt in der Einfachheit des Senders, welcher in der einfachsten Form nur ein primitives Trägersignal aussenden muss. Damit können handelsübliche nicht modifizierte BLE Sender verwendet werden.

Zusammenfassung der Erfindung

Es ist eine Aufgabe der vorliegenden Erfindung, eine verbesserte Winkelmessung eines Funksenders, für ein Kraftfahrzeug bereitzustellen.

Diese Aufgabe wird durch die Gegenstände der unabhängigen Patentansprüche gelöst. Ausführungsformen und Weiterbildungen sind den abhängigen Patentansprüchen, der Beschreibung und den Figuren zu entnehmen.

Ein erster Aspekt der vorliegenden Erfindung betrifft eine Vorrichtung zum Bestimmen von Qualitätseigenschaften für Winkelmessung für ein Kraftfahrzeug, wobei die Vorrichtung umfasst: eine Winkelschätzeinrichtung, welche mindestens einen Empfänger umfasst, und wobei die Winkelschätzeinrichtung dazu ausgelegt ist, basierend auf Laufzeitunterschied und Antennenabstand eine Winkelschätzung für einen Sender eines Funksignals bereitzustellen.

Ferner umfasst die Vorrichtung zum Bestimmen von Qualitätseigenschaften für Winkelmessung eine Bewertungseinrichtung, welche dazu ausgelegt ist, für die von der Winkelschätzeinrichtung bereitgestellte Winkelschätzung einen Qualitätswert zu bestimmen und basierend auf der Winkelschätzung und dem Qualitätswert die Winkelmessung bereitzustellen.

Ein zweiter Aspekt der vorliegenden Erfindung betrifft ein Verfahren zum Bestimmen von Qualitätseigenschaften für Winkelmessungen für ein Kraftfahrzeug, wobei das Verfahren die folgenden Schritte umfasst:
Als ein erster Schritt erfolgt ein Bereitstellen einer Winkelschätzung für einen Sender eines Funksignals basierend auf Laufzeitunterschied und Antennenabstand.

Als ein zweiter Schritt erfolgt ein Bestimmen eines Qualitätswertes für die von der Winkelschätzeinrichtung bereitgestellte Winkelschätzung und Bereitstellen der Winkelmessung basierend auf der Winkelschätzung und dem Qualitätswert.

Die vorliegende Erfindung ermöglicht vorteilhaft, Nachteile bezüglich der Zuverlässigkeit und der Messabweichung des herkömmlichen Winkelschätzverfahrens zu reduzieren.

Der Nachteil eines Winkelschätzverfahrens mit einer niedrigen Anzahl von Empfangsantennen, wie im Fahrzeugbereich, liegt in der begrenzten Trennschärfe bei mehreren auftretenden Einfallsrichtungen.

Dies tritt immer dann auf wenn das abgesendete Signal über mehrere Pfade zum Empfänger gelangt. Man spricht hier von einem sogenannten Multipfad- oder Mehrpfadszenario.

Diese Situation tritt in der Realität recht häufig auf, wenn die direkte Verbindung durch Störobjekte verdeckt wird. Der Winkelschätzer kann im besten Fall die unterschiedlichen Empfangsrichtungen unterscheiden. Ist dies nicht möglich, überlagern sich die einzelnen Richtungen, so dass sich eine Abweichung von der Richtung der kürzesten Verbindung ergibt.

Um dieses Problem zu beheben, gibt es verschiedene Lösungsansätze, welche im Wesentlichen auf einer zeitlichen Filterung basieren. Dabei wird versucht die Schwankungen zu minimieren, indem z.B. ein Mittelwertfilter eingesetzt wird oder eine Prädiktion auf Basis eines Bewegungsprofils durchgeführt wird (Kalman-Filter). Entscheidend dabei ist, dass alle gemessenen Daten gleichberechtigt berücksichtigt werden.

Die vorliegende Erfindung ermöglicht, dass nun ein Qualitätsindex eingeführt wird, welcher Auskunft darüber gibt, wie "mehrpfadbelastet" die Übertragung ist.

Damit eröffnen sich für die oben genannten Verfahren Möglichkeiten, Winkelschätzungen mit hohem erwarteten Mehrpfadanteil entweder zu verwerfen oder niedriger zu gewichten.

Im Folgenden werden zwei Verfahren beschrieben, welche es ermöglichen über die Verwendung einer Frequenzdiversität eine Qualitätsaussage zur Richtungsschätzung zu geben. Von Frequenzdiversität spricht man, falls nicht nur eine Trägerfrequenz, sondern mehrere Trägerfrequenzen verwendet werden.

Die Ergebnisse der einzelnen Messungen werden dabei im Bewusstsein dieser Frequenzänderungen betrachtet.

Weitere vorteilhafte Ausführungsformen werden durch die abhängigen Patentansprüche definiert.

In einer vorteilhaften Ausführungsform der vorliegenden Erfindung ist vorgesehen, dass die Bewertungseinrichtung dazu ausgelegt ist, den Qualitätswert basierend auf:

- einer Anzahl an möglichen Übertragungspfaden des Funksignals; und/oder
- eines Betrags eines Mehrpfadanteils des Funksignals bereitzustellen.

In einer vorteilhaften Ausführungsform der vorliegenden Erfindung ist vorgesehen, dass die Bewertungseinrichtung dazu ausgelegt ist, den Qualitätswert basierend auf einer Auswertung von Feldstärkeinformationen über die Frequenz beim Vorliegen einer Frequenzdiversität bereitzustellen.

In einer vorteilhaften Ausführungsform der vorliegenden Erfindung ist vorgesehen, dass die Bewertungseinrichtung dazu ausgelegt ist, den Qualitätswert basierend auf einer Änderung der Kanaldämpfung über die Frequenz bereitzustellen.

In einer vorteilhaften Ausführungsform der vorliegenden Erfindung ist vorgesehen, dass die Bewertungseinrichtung dazu ausgelegt ist, den Qualitätswert basierend auf einer Auswertung von Richtungsinformationen über die Frequenz beim Vorliegen einer Frequenzdiversität bereitzustellen.

In einer vorteilhaften Ausführungsform der vorliegenden Erfindung ist vorgesehen, dass die Bewertungseinrichtung dazu ausgelegt ist, den Qualitätswert basierend auf einer Auswertung von Betrag und Phase der einzelnen Kanäle über die Frequenz bereitzustellen.

Die beschriebenen Ausgestaltungen und Weiterbildungen lassen sich beliebig miteinander kombinieren.

Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung.

Kurze Beschreibung der Figuren

Die beiliegenden Zeichnungen sollen ein weiteres Verständnis der Ausführungsformen der Erfindung vermitteln. Die beiliegenden Zeichnungen veranschaulichen Ausführungsformen und dienen im Zusammenhang mit der Beschreibung der Erklärung von Konzepten der Erfindung.

Andere Ausführungsformen und viele der genannten Vorteile ergeben sich im Hinblick auf die Zeichnungen. Die dargestellten Elemente der Zeichnungen sind nicht notwendigerweise maßstabsgetreu zueinander gezeigt.

Es zeigen:

Fig. 1: eine schematische Darstellung einer herkömmlichen Richtungsschätzung zur Erläuterung der Erfindung;

Fig. 2: eine schematische Darstellung eines Diagramms zum Vergleich von frequenzflacher Kanal gegenüber frequenzselektivem Kanal gemäß einer Ausführungsform der vorliegenden Erfindung;

Fig. 3: eine schematische Darstellung eines Setups für Feldsimulationen gemäß einer weiteren Ausführungsform der vorliegenden Erfindung;

Fig. 4: eine schematische Darstellung eines Vergleichs von Sichtverbindung mit Mehrpfadverbindung anhand einer Feldsimulation gemäß einer weiteren Ausführungsform der vorliegenden Erfindung;

Fig. 5: eine schematische Darstellung einer Vorrichtung zum Bestimmen von Qualitätseigenschaften für Winkelmessung für ein Kraftfahrzeug gemäß einer weiteren Ausführungsform der vorliegenden Erfindung;

Fig. 6: eine schematische Darstellung eines Verfahrens zum Bestimmen von Qualitätseigenschaften für Winkelmessung für ein Kraftfahrzeug gemäß einer weiteren Ausführungsform der vorliegenden Erfindung;

Detaillierte Beschreibung von Ausführungsbeispielen

In den Figuren der Zeichnungen bezeichnen gleiche Bezugszeichen gleiche oder funktionsgleiche Elemente, Bauteile, Komponenten oder Verfahrensschritte, soweit nichts Gegenteiliges angegeben ist.

Die Fig. 1 zeigt eine schematische Darstellung einer herkömmlichen Richtungsschätzung zur Erläuterung der Erfindung.

Die Fig. 2 zeigt eine schematische Darstellung eines Diagramms zum Vergleich von frequenzflacher Kanal gegenüber frequenzselektivem Kanal gemäß einer Ausführungsform der vorliegenden Erfindung.

Die Fig. 2 zeigt eine Auswertung der Feldstärkeinformation (RSSI) über die Frequenz:
Wenn die Übertragung auf Sichtverbindung (auf Englisch auch als "Line of Sight" bezeichnet) mit keinem oder minimalen Mehrpfadanteilen erfolgt, ergibt sich eine annähernd gleichförmige Kanaldämpfung über der Frequenz.

Dies würde auch auftreten, wenn mehrere Pfade mit exakt gleicher Laufzeit eintreffen, was allerdings sehr unwahrscheinlich ist.

Durch die Betrachtung der empfangenen Feldstärke über der Frequenz oder genauer der Feldstärkeänderung über der Frequenz kann damit eine Aussage bezüglich der zusätzlichen Mehrpfade getroffen werden.

Dies wird in der Fig. 2 dargestellt.

Liegt nur ein Übertragungspfad vor, gibt es keine Änderung der Kanaldämpfung über der Frequenz. Für den Fall, dass z.B. zwei Pfade mit einem definierten Laufzeitunterschied vorliegen, ergeben sich zyklische Bereiche negativer und positiver Interferenz.

In einer realen Ausgestaltung würde man hierbei die RSSI Information über mehrere Kanäle abfragen. Bewegt sich die Änderung der Kanaldämpfung innerhalb eines begrenzten Korridors (2.8. 3-5 dB), würde man auf eine Übertragung mit wenig Mehrpfadanteil schließen.

Liegt die Änderung außerhalb entsprechend auf eine Übertragung mit hohem Mehrpfadanteil. Diese Information kann dabei als Qualitätsindex für die Winkelschätzung verwendet werden, da es klar ist, dass sich die Anzahl der Mehrpfade negativ auf die Qualität der Winkelschätzung auswirkt.

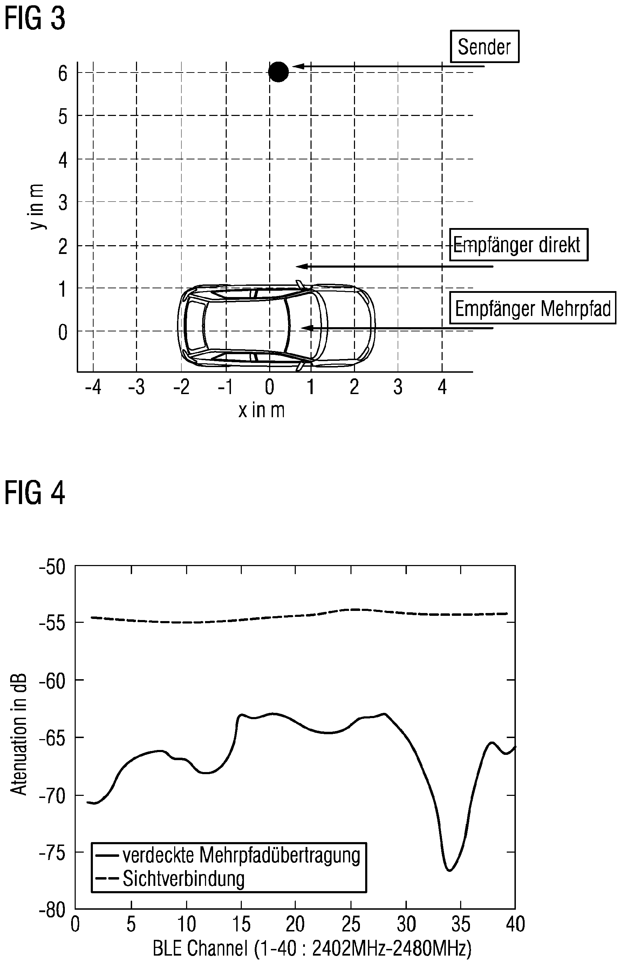

Diese Zusammenhänge wurden mit Feldstärkesimulationen überprüft und nachgewiesen. Im vorliegenden Fall wurde ein Sendeposition 5m neben dem Auto gewählt (Fig. 3).

Die Fig. 3 zeigt eine schematische Darstellung eines Setups für Feldsimulationen gemäß einer weiteren Ausführungsform der vorliegenden Erfindung.

Als Empfänger wurden zwei Positionen simuliert: einmal außen am Fahrzeug mit direkter Sichtverbindung und einmal im Fahrzeug verbaut mit verdeckter Mehrpfadübertragung.

Die Fig. 4 zeigt eine schematische Darstellung eines Vergleichs der Dämpfung (auf Englisch oder in der Fachsprache auch "Attenuation") von einer Sichtverbindung im Vergleich mit der Dämpfung bzw. des Dämpfungsverhaltens einer Mehrpfadverbindung anhand einer Feldsimulation gemäß einer weiteren Ausführungsform der vorliegenden Erfindung.

Im Ergebnis (Fig. 4) bestätigt sich die vorher getroffene Annahme. Der Empfänger mit direkter Sichtverbindung unterliegt nur einer geringfügigen Schwankung der Stärke des Empfangssignals (<3 dB), während der Empfänger mit verdeckter Sichtverbindung - d.h. Mehrpfadverbindung - einer Schwankungsbreite von annähernd 15 dB unterliegt.

Die Auswertung dieser Schwankung ist bei Einsatz des BLE Protokolls leicht möglich, da hier über der Zeit ein Frequenz-Hopping stattfindet, d.h. der Kommunikationskanal über der Zeit von Kommunikation zu Kommunikation zufällig variiert wird.

Im Folgenden ist die Auswertung der Richtungsinformation über der Frequenz dargestellt:
Gemäß einer weiteren Ausführungsform der vorliegenden Erfindung eignet sich ferner zusätzlich zur Feldstärkeinformation auch die gemessene Richtung eines Winkelschätzers für die Indikation der Mehrpfadsituation.

Die in Fig. 4 für das Mehrpfadszenario gezeigte Variation der Empfangsleistung entsteht durch die Überlagerung mehrerer Empfangspfade in Betrag und Phase.

Liegen nun mehrere Empfangspfade vor und kann ein Winkelschätzer diese nicht getrennt erfassen, stellt sich ein Verhältnis ein, welches ebenfalls über Betrag und Phase der einzelnen Kanäle gebildet wird.

Mit der Variation des Übertragungskanals ändern sich nun direkt die Phasenverhältnisse und damit direkt die bestimmten Einfallsrichtungen. Damit kann aus der zeitlichen Beobachtung über die Variation der Messungen rückgeschlossen werden, ob man sich in direkter Sichtverbindung befindet. Bei direkter Verbindung werden die bestimmten Empfangsrichtungen annähernd gleichförmig sein, während sie bei verdeckter Kommunikation einer starken Variation unterliegen.

Der Vorteil der vorliegenden Erfindung liegt in der Erweiterung des Winkelschätzers über die Einführung eines Qualitätswertes für die bestimmte Einfallsrichtung eines Winkelschätzers.

Die Bewertung der Qualität einer Messung stellt in einem realen System einen bedeutenden Mehrwert dar, da sie es ermöglicht, eine bedeutend höhere Gesamtgenauigkeit des Systems zu erzielen.

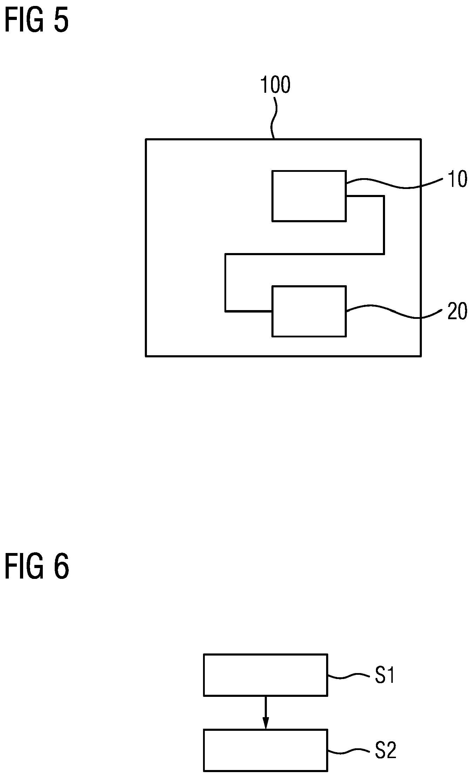

Die Fig. 5 zeigt eine schematische Darstellung einer Vorrichtung 100 zum Bestimmen von Qualitätseigenschaften für Winkelmessung für ein Kraftfahrzeug gemäß einer weiteren Ausführungsform der vorliegenden Erfindung.

Die Vorrichtung 100 umfasst eine Winkelschätzeinrichtung 10, welche mindestens einen Empfänger umfasst und welche dazu ausgelegt ist, basierend auf Laufzeitunterschied und Antennenabstand eine Winkelschätzung für einen Sender eines Funksignals bereitzustellen.

Die Winkelschätzeinrichtung 10 kann beispielsweise lediglich einen Empfänger umfassen, wobei der eine Empfänger beispielsweise mit mindestens zwei Antennen gekoppelt wird und der Laufzeitunterschied und der Antennenabstand der mindestens zwei Antennen erfasst wird.

Gemäß einer weiteren Ausführungsform der vorliegenden Erfindung kann die Winkelschätzeinrichtung 10 auch mit mindestens zwei Empfängern mit je einer Antenne ausgebildet werden.

Ferner umfasst die Vorrichtung 100 eine Bewertungseinrichtung 20, welche dazu ausgelegt ist, für die von der Winkelschätzeinrichtung 10 bereitgestellte Winkelschätzung einen Qualitätswert zu bestimmen und basierend auf der Winkelschätzung und dem Qualitätswert die Winkelmessung bereitzustellen.

Die Fig. 6 zeigt eine schematische Darstellung eines Verfahrens zum Bestimmen von Qualitätseigenschaften für Winkelmessung für ein Kraftfahrzeug gemäß einer weiteren Ausführungsform der vorliegenden Erfindung.

Das Verfahren zum Bestimmen von Qualitätseigenschaften für Winkelmessung für ein Kraftfahrzeug umfasst die folgenden Schritte:
Bereitstellen S1, mit Hilfe von einer Winkelschätz-einrichtung 10, welche mindestens einen Empfänger umfasst, einer Winkelschätzung für einen Sender eines Funksignals basierend auf Laufzeitunterschied und Antennenabstand; und

Bestimmen S2, mit Hilfe von einer Bewertungseinrichtung 20, eines Qualitätswertes für die von der Winkelschätzeinrichtung 10 bereitgestellte Winkel-schätzung und Bereitstellen von der Winkelmessung basierend auf der Winkelschätzung und dem Qualitätswert.

Der Begriff Kraftfahrzeug umfasst jegliche durch einen Motor angetriebene, nicht an Schienen gebundene Fahrzeuge oder, in anderen Worten ausgedrückt, nicht dauerhaft spurgeführte Landfahrzeuge, die durch Maschinenkraft bewegt werden.

Obwohl die vorliegende Erfindung anhand bevorzugter Ausführungsbeispiele vorstehend beschrieben wurde, ist sie nicht darauf beschränkt, sondern auf vielfältige Art und Weise modifizierbar. Insbesondere lässt sich die Erfindung in mannigfaltiger Weise verändern oder modifizieren, ohne vom Kern der Erfindung abzuweichen.

Ergänzend sei darauf hingewiesen, dass "umfassend" und "aufweisend" keine anderen Elemente oder Schritte ausschließt und "eine" oder "ein" keine Vielzahl ausschließt.

Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Vorrichtung zum Bestimmen von Qualitätseigenschaften für Winkelmessung für ein Kraftfahrzeug, wobei die Vorrichtung umfasst:

   - eine Winkelschätzeinrichtung (10), welche mindestens einen Empfänger umfasst und welche dazu ausgelegt ist, basierend auf Laufzeitunterschied und Antennenabstand eine Winkelschätzung für einen Sender eines Funksignals bereitzustellen; und
   - eine Bewertungseinrichtung (20), welche dazu ausgelegt ist, für die von der Winkelschätzeinrichtung (10) bereitgestellte Winkelschätzung einen Qualitätswert zu bestimmen und basierend auf der Winkelschätzung und dem Qualitätswert die Winkelmessung bereitzustellen

   wobei die Vorrichtung als Fahrzeugzugangssystem ausgebildet ist,

   - wobei die Vorrichtung dazu ausgebildet ist, ein Smartphone relativ zu einem oder mehreren in einem Fahrzeug verbauten Transpondermodulen durch die Winkelabschätzung zu lokalisieren.

2. Vorrichtung nach Anspruch 1, wobei die Bewertungseinrichtung (20) dazu ausgelegt ist, den Qualitätswert basierend auf:

   - einer Anzahl an möglichen Übertragungspfaden des Funksignals; und/oder
   - eines Betrags eines Mehrpfadanteils des Funksignals bereitzustellen.

3. Vorrichtung nach Anspruch 1 oder 2, wobei die Bewertungseinrichtung (20) dazu ausgelegt ist, den Qualitätswert basierend auf einer Auswertung von Feldstärkeinformationen über die Frequenz beim Vorliegen einer Frequenzdiversität bereitzustellen.

4. Vorrichtung nach Anspruch 3, wobei die Bewertungseinrichtung (20) dazu ausgelegt ist, den Qualitätswert basierend auf einer Änderung der Kanaldämpfung über die Frequenz bereitzustellen.

5. Vorrichtung nach einem der vorhergehenden Ansprüche, wobei die Bewertungseinrichtung (20) dazu ausgelegt ist, den Qualitätswert basierend auf einer Auswertung von Richtungsinformationen über die Frequenz beim Vorliegen einer Frequenzdiversität bereitzustellen.

6. Vorrichtung nach Anspruch 5, wobei die Bewertungseinrichtung (20) dazu ausgelegt ist, den Qualitätswert basierend auf einer Auswertung von Betrag und Phase der einzelnen Kanäle über die Frequenz bereitzustellen.

7.  Vorrichtung nach einem der vorhergehenden Ansprüche,
    wobei die Vorrichtung dazu ausgebildet ist, ein Smartphone in enger Nachbarschaft zu einem oder mehreren in einem Fahrzeug verbauten Transpondermodulen durch Winkelmessung mit Bluetooth Low Energy (BLE) zu lokalisieren.

8.  Verfahren zum Bestimmen von Qualitätseigenschaften für Winkelmessung für ein Kraftfahrzeug, wobei das Verfahren die folgenden Schritte umfasst:

    - Bereitstellen (S1), mit Hilfe von einer Winkelschätzeinrichtung (10), welche mindestens einen Empfänger umfasst, einer Winkelschätzung für einen Sender eines Funksignals basierend auf Laufzeitunterschied und Antennenabstand; und
    - Bestimmen (S2), mit Hilfe von einer Bewertungseinrichtung (20), eines Qualitätswertes für die von der Winkelschätzeinrichtung (10) bereitgestellte Winkelschätzung und Bereitstellen von der Winkelmessung basierend auf der Winkelschätzung und dem Qualitätswert
    - wobei als Fahrzeugzugangssystem ein Smartphone relativ zu einem oder mehreren in einem Fahrzeug verbauten Transpondermodulen durch Winkelmessung lokalisiert wird.

9.  Computerlesbares Medium, auf dem ein Programmelement gespeichert ist, das wenn es auf einem Prozessor ausgeführt wird, den Prozessor anleitet, die Schritte nach Anspruch 8 auszuführen.

FIG 1

S

Basis

FIG 2

frequenzflacher Kanal
frequenzselektiver Kanal

|Channel| in dB

Frquenz in GHz

# FIG 3

# FIG 4

FIG 5

100

10

20

FIG 6

S1

S2